# EUROPEAN PATENT SPECIFICATION

(11) **EP 0 336 750 B1**
(45) Date of publication and mention of the grant of the patent: **24.02.1993**
(21) Application number: 89303396.9
(22) Date of filing: 06.04.1989
(51) Int. Cl.: B29C 47/12

(54) **Extrusion die for forming honeycomb structures**
Strangpressdüse zur Formung von Wabenkörpern
Filière d'extrusion pour mouler des structures alvéolées

(30) Priority: 06.04.1988 JP 84856/88; 29.09.1988 JP 244897/88
(43) Date of publication of application: 11.10.1989
(73) Proprietor: NGK INSULATORS, LTD., Nagoya City Aichi Pref. (JP)
(72) Inventor: Komoda, Tadanori, Toyoake-shi Aichi-ken (JP)
(74) Representative: Paget, Hugh Charles Edward

(56) References cited:
- US-A- 3 790 654
- US-A- 4 290 743
- US-A- 4 343 604
- US-A- 4 373 985
- US-A- 4 550 005

## Description

The present invention relates to an extrusion die for forming cellular honeycomb structures from extrudable thermoplastic batch material.

In US-A-3 790 654 and US-A-4 373 985, there has been proposed an extrusion die assembly which comprises a die body having inlet and outlet portions, the inlet portion being provided with a a plurality of feed passageways separated by walls and arranged in the form of an array for feeding extrudable thermoplastic batch material therethrough, and the outlet portion being provided with a plurality of core pins integral with the innermost intersecting ends of the walls to form a plurality of discharge slots through which the batch material is extruded to form the matrix of a honeycomb structure.

In general, the prior art die body is made of a selected metallic material to ensure durability of the extrusion die assembly, and the opening area of the outlet portion is determined smaller than that of the inlet portion to completely fill the radial extent of the discharge slots with the batch material prior to the discharge thereof from the slots. When extruded through the discharge slots to form the matrix of a cellular honeycomb article, the batch material acts as an abrasive compound to cause abrasion of the die body in a short period of time. For this reason, it is required to protect the die body from such abrasion by providing a layer of abrasion resistant metallic material on the internal partition walls and core pins. The layer of metallic material, however, may not be uniformly deposited on the internal partition walls and core pins due to the complicated internal construction of the die body, resulting in insufficient resistance to abrasion. For use in filters, the parallel partition walls of the extruded cellular honeyconb article are coated with ceramic porous thin films. This requires that the partition wall surfaces in the cellular honeycomb article should be smoothly completed to form the porous thin films in a uniform thickness thereon. The smoothness of the wall surfaces is, however, greatly affected by the property of extrudable ceramic batch material.

The cellular honeycomb filters are utilized to eliminate yeast and vacteria from foods, beer, wine and fruit juice and to purify medicines. If in such a case metal constituents were contained in the cellular honeycomb article in its forming process, fears would be felt for the fact that the metal constituents are melted into the foods and beverages. In such a conventional extrusion die as described above, irregular resistance to batch flow in the inlet portion will cause fluctuation of the radial flow of batch material in speed, resulting in deformation of the extruded cellular honeycomb structure in the course of drying, preheating and firing processes.

It is, therefore, a primary object of the present invention to provide an improved extrusion die capable of overcoming the problems discussed above.

According to the present invention, there is provided an extrusion die as set out in claim 1. The die body is made of sintered ceramic material such as sintered partially stabilized zirconia (PSZ) to enhance durability of the die body without necessarily any layer of abrasion resistant material on the internal partition walls and core pins and to form a cellular honeycomb structure the internal wall surfaces of which are smoothly formed suitable for use in filters.

In a practical embodiment of the present invention, the ratio of the open area of the discharge slots to the open area of the feed passageways is determined in accordance vith the flow speed distribution of batch material in the inlet portion of the die body to cause a uniform flow of batch material in the outlet portion of the die body.

For a better understanding of the present invention, and to show how the same may be carried into effect, reference will now be made, by way of example, to the accompanying drawings, in which:
Fig. 1 is a top plan view of an extrusion die in accordance with the present invention;
Fig. 2 is a bottom plan view of the extrusion die shown in Fig. 1;
Fig. 3 is a partly sectioned elevational view of the extrusion die shown in Figs. 1 and 2;
Figs. 4, 5 and 6 illustrate the extrusion die mounted on different types of extruding machines, respectively;
Fig. 7 is a sectional view of a modification of the extrusion die shown in Figs. 1 through 3;
Fig. 8 is a top plan view of the extrusion die shown in Fig. 7;
Fig. 9 is a bottom plan view of the extrusion die shown in Fig. 7; and
Fig. 10 is a sectional view of another modification of the extrusion die shown in Figs. 1 through 3.

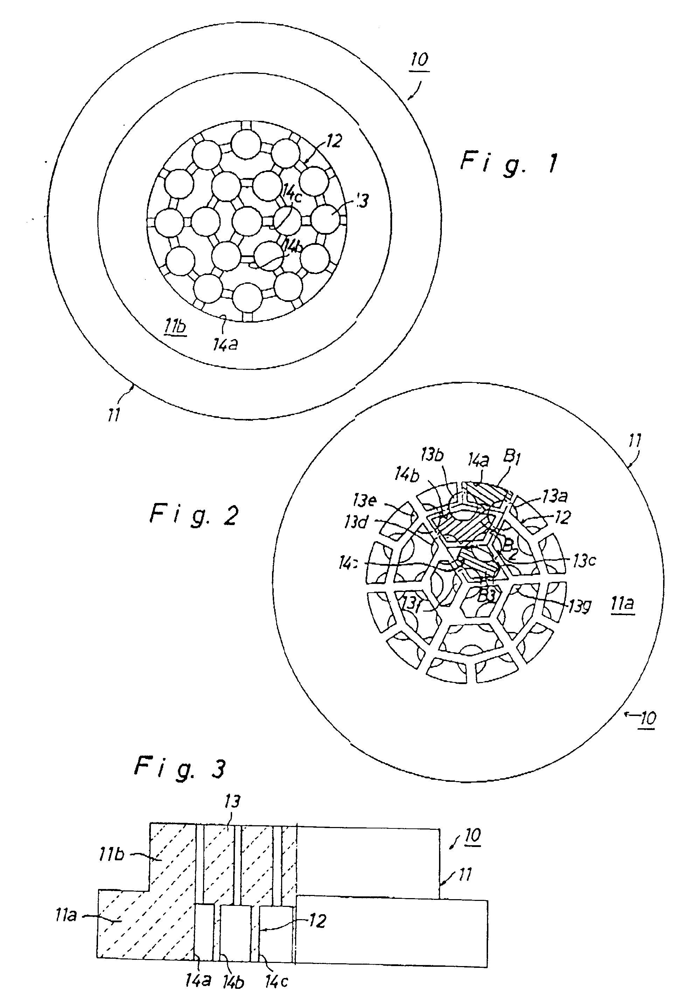

Referring now to the drawings, particularly in Figs. 1 through 3 inclusive, there is illustrated an extrusion die 10 in the form of a unitary die body 11 which is prepared from a stepped cylindrical block of sintered partially stabilized zirconia through ultrasonic machining from the opposite end faces thereof. The extrusion die body 11 has an inlet portion 11a of large diameter and an outlet portion 11b of small diameter. The inlet portion 11a of die body 11 is integrally formed therein with a plurality of intersecting parallel partition walls 12 which extend axially inwardly in a predetermined depth to form a plurality of feed passageways 14a, 14b, 14c in the form of a gridwork for feeding extrudable thermoplastic batch material therethrough. The outlet portion 11b of die body 11 is formed therein with a plurality of annularly arranged core pins 13 integral with the intersecting innermost ends of partition walls 12 to form a plurality of discharge slots through which the batch material is extruded to form the matrix of a cellular honeycomb structure.

In the extrusion die 10, the squeeze ratio of batch material is determined by the ratio of the opening area B of the discharge slots against the opening area A of feed passageways 14a, 14b, 14c. The opening area B against the opening area A is measured as follows. Against the opening area A₁ of feed passageway 14a, an opening area B₁ indicated by oblique lines in Fig. 2 is measured by subtraction of the superposed area of core pins 13a, 13b from an area surrounded by dot and dash lines. Against the opening area A₂ of feed passageway 14b, an opening area B₂ indicated by oblique lines in Fig. 2 is measured by subtraction of the superposed area of core pins 13a through 13e from an area surrounded by dot and dash lines. Similarly, an opening area B₃ against the opening area A₃ of feed passageway 14c is indicated by oblique lines in Fig. 2 and is measured by subtraction of the superposed area of core pins 13c, 13d, 13f, 13g from an area surrounded by dot and dash lines. In a practical embodiment of the present invention, the ratio between the opening areas A and B is determined in accordance with the flow speed distribution of batch material in the inlet portion 11a to cause a uniform radial flow of batch material in the outlet portion 11b.

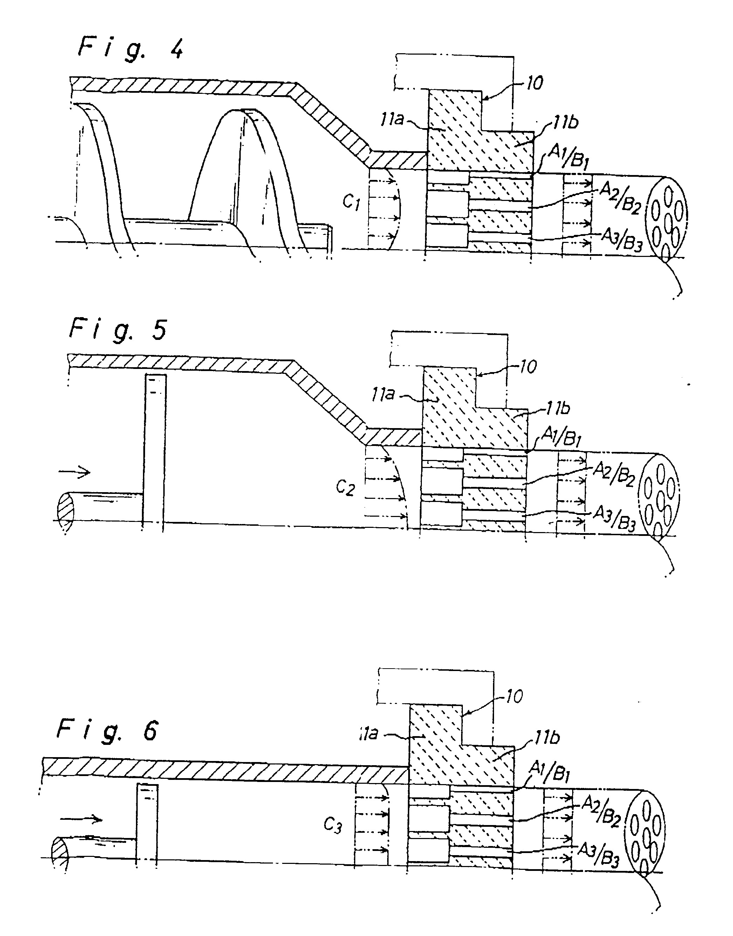

In the case that the extrusion die 10 is mounted on an extruding machine of the screw type as shown in Fig. 4, the flow speed distribution of batch material in the inlet portion 11a is caused as shown by arrows C₁ in the figure. Thus, the squeeze ratio of batch material is determined to be A₁/B₁ = A₃/B₃ < A₂/B₂. In the case that the extrusion die 10 is mounted on an extruding machine of the plunger type as shown in Fig. 5, the flow speed distribution of batch material in the inlet portion 11a is caused as shown by arrows C₂ in the figure. Thus, the squeeze ratio of batch material is determined to be A₁/B₁ < A₂/B₂ < A₃/B₃. In the case that the extrusion die 10 is mounted on another extruding machine of the plunger type as shown in Fig. 6, the flow speed distribution of batch material in the inlet portion 11a is caused as shown by arrows C₃ in the figure. Thus, the squeeze ratio of batch material is determined to be A₁/B₁ ≦ A₂/B₂ = A₃/B₃.

As the extrusion die 10 is made of sintered partially stabilized zirconia without containing therein any metallic material, it is superior in resistance to abrasion and is useful to form a cellular honeycomb article the internal wall surfaces of which are smoothly formed suitable for use in filters. With the extrusion die 10, the internal construction of an extruded cellular honeycomb structure is not affected by the flow speed distribution of batch material in the inlet portion 11a. This is effective to eliminate deformation of the extruded cellular honeycomb structure in the course of drying, preheating and firing processes.

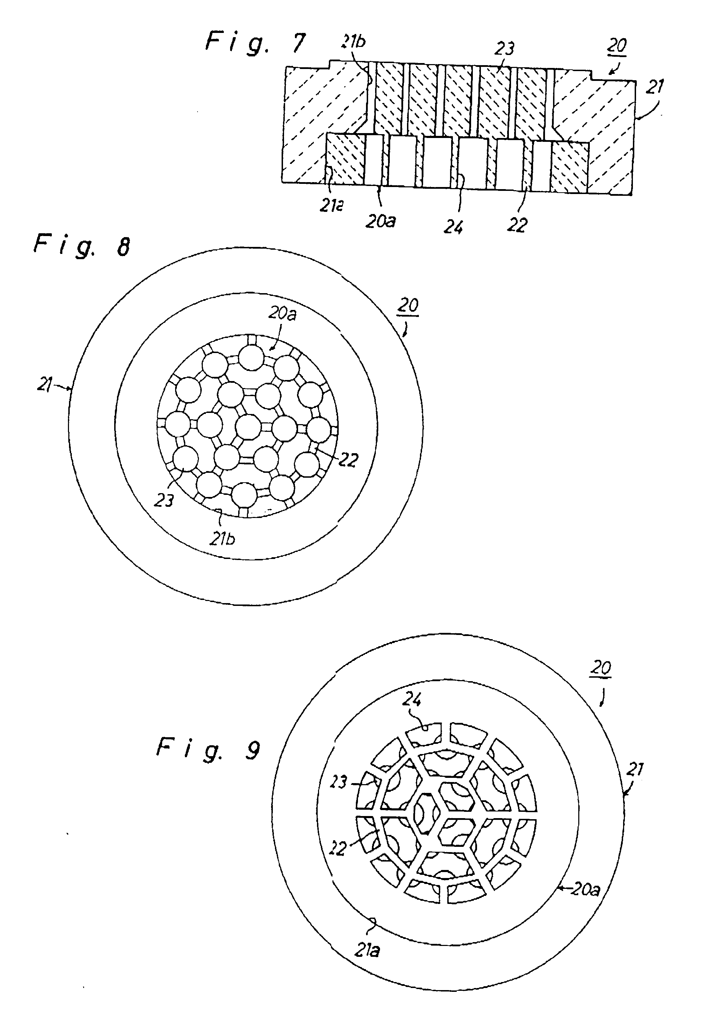

In Fig. 7 there is illustrated a modified extrusion die assembly 20 of the present invention which comprises a die body 20a coupled within a collar member 21. The die body 20a and collar member 21 are made of sintered partially stabilized zirconia. The collar member 21 has a stepped bore forming a cylindrical cavity 21a of larger diameter and a cylindrical cavity 21b of small diameter. The die body 20a has an inlet portion coupled within the cylindrical cavity 21a of collar member 21 and an outlet portion inserted into the cylindrical cavity 21b of collar member 21. Similarly to the extrusion die 10 shown in Figs. 1 through 3, the inlet portion of die body 20a is integrally formed with a plurality of intersecting parallel partition walls 22 which extend axially inwardly in a predetermined depth to form a plurality of feed passageways 24 in the form of a gridwork, while the outlet portion of die body 20a is formed with a plurality of annularly arranged core pins 23 integral with the intersecting innermost ends of the parition walls 22 to form a plurality of discharge slots through which the batch material is extruded to form the matrix of a cellular honeycomb structure.

In the extrusion die assembly 20, the outlet portion of die body 20a forms an annular discharge passage with the peripheral wall of cylindrical cavity 21b. The feed passageways 24 supply the batch material to the annular discharge passage to provide an integral casing or shell about the honeycomb matrix formed by the gridwork of the discharge slots. Since the die body 20a is replaceably coupled within the collar member 21, the outer diameter of an extruded cellular honeycomb structure can be adjusted by replacement of the collar member 21 with another collar member having a cylindrical cavity the diameter of which is different from the cylindrical cavity 21b of collar member 21. In operation, the peripheral wall of the cylindrical cavity 21b most suffers abrasion and damages, but replacement of the collar member 21 will prolong the life of die body 20a. Since the die body 20a and the collar member 21 are manufactured separately, the production of the die assembly 20 is much easier and less expensive than that of the unitary extrusion die shown in Figs. 1 through 3.

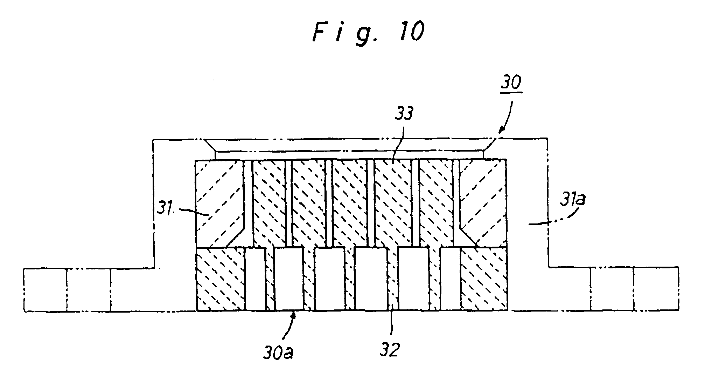

In Fig. 10 there is illustrated another modified extrusion die 30 of the present invention which comprises a collar member 31 coaxially superposed on a die body 30a. The collar member 31 and die body 30a are made of sintered partially stabilized zirconia, and the internal construction of die body 10a is substantially the same as that of the die body 20a shown in Fig. 7. The collar member 31 and die body 30a are integrally mounted on an extruding machine (not shown) by means of a metallic bracket 31a shown by two-dots and dash lines in the figure.

## Claims

1. An extrusion die for forming a cellular honeycomb structure, comprising a die body (11) having inlet and outlet portions (11a, 11b), the inlet portion (11a) having a plurality of intersecting parallel partition walls (12) which extend axially inwardly to a predetermined depth to form a plurality of feed passageways (14a, 14b, 14c) in the form of a gridwork for feeding extrudable thermoplastic batch material therethrough, and the outlet portion (11b) having a plurality of annularly arranged core pins (13) integral with the intersecting innermost ends of said partition walls (12) to form discharge slots through which the batch material is extruded to form the matrix of a cellular honeycomb structure, characterised in that said die body (11) is a unitary body of sintered ceramic material providing said internal partition walls (12) and core pins (13).

2. An extrusion die as claimed in Claim 1, wherein said die body (11) is made of sintered partially stabilized zirconia.

3. An extrusion die as claimed in Claim 1, or claim 2, wherein the ratio of an opening area (B) of said discharge slots against an opening area (A) of said feed passageways (14a, 14b, 14c) is determined in accordance with the flow speed distribution of the batch material in the inlet portion (11a) of said die body.

4. An extrusion die as claimed in Claim 1, claim 2 or claim 3 wherein said die body (20a) is coaxially coupled within a collar member (21) of sintered ceramic material in such a manner that the outlet portion of said die body (20a) forms an annular passage vith the peripheral wall of a cylindrical cavity (21b) formed in said collar member (21).

5. An extrusion die as claimed in Claim 1, claim 2 or claim 3 wherein said die body (30a) is coaxially superposed on a collar member (31) of sintered ceramic material in such a manner that the outlet portion of said die body (30a) forms an annular passage with the inner peripheral wall of said collar member (31).

## Patentansprüche

1. Extrusionsform bzw. Strangpreßmatrize zum Bilden einer zellenartigen Wabenanordnung, umfassend einen Düsenkörper (11) mit Einlaß- und Auslaßabschnitten (11a,11b), wobei der Einlaßabschnitt (11a) eine Vielzahl einander überschneidender paralleler Trennwände (12) aufweist, die sich bis in eine vorherbestimmte Tiefe axial nach innen erstrecken, um eine Vielzahl von Zufuhrdurchgängen (14a, 14b,14c) in der Form eines Gitterwerks zu bilden, um extrudierbares thermoplastisches Chargenmaterial durch dieses hindurch zuzuführen, und der Auslaßabschnitt (11b) eine Vielzahl von ringförmig angeordneten Kernstiften (13) aufweist, die mit den einander überschneidenden am weitesten innen gelegenen Enden der genannten Trennwände (12) einstückig ausgebildet sind, um Auslaßschlitze zu bilden, durch welche das Chargenmaterial extrudiert wird, um die Matrix einer zellenartigen Wabenanordnung zu bilden, dadurch gekennzeichnet, daß der genannte Düsenkörper (11) ein einstückiger Körper aus gesintertem Keramikmaterial ist, welcher die genannten inneren Trennwände (12) und Kernstifte (13) aufweist.

2. Extrusionsform nach Anspruch 1, worin der genannte Düsenkörper (11) aus gesintertem teilweise stabilisiertem Zirkondioxid besteht.

3. Extrusionsform nach Anspruch 1 oder 2, worin das Verhältnis zwischen einer Öffnungsfläche (B) der genannten Auslaßschlitze und einer Öffnungsfläche (A) der genannten Zufuhrdurchgänge (14a,14b,14c) gemäß der Fließgeschwindigkeitsverteilung des Chargenmaterials im Einlaßabschnitt (11a) des genannten Düsenkörpers bestimmt wird.

4. Extrusionsform nach Anspruch 1, 2 oder 3, worin der genannte Düsenkörper (20a) auf solche Art koaxial innerhalb eines Kragenelements (21) aus gesintertem Keramikmaterial gekoppelt ist, daß der Auslaßabschnitt des genannten Düsenkörpers (20a) mit der peripheren Wand einer im genannten Kragenelement (21) ausgebildeten zylindrischen Ausnehmung (21b) einen ringförmigen Durchgang bildet.

5. Extrusionsform nach Anspruch 1, 2 oder 3, worin der genannte Düsenkörper (30a) auf solche Weise koaxial auf einem Kragenelement (31) aus gesintertem Keramikmaterial aufgesetzt ist, daß der Auslaßabschnitt des genannten Düsenkörpers (30a) mit der inneren peripheren Wand des genannten Kragenelements (31) einen ringförmigen Durchgang bildet.

## Revendications

1. Filière d'extrusion pour former une structure alvéolaire cellulaire, comprenant un corps de filière (11) possédant des portions d'entrée et de sortie (11a, 11b), la portion d'entrée (11a) possédant une pluralité de parois de séparation d'intersection parallèles (12) qui s'étendent axialement vers l'intérieur sur une profondeur prédéterminée pour former une pluralité de passages d'amenée (14a, 14b, 14c) sous forme d'une grille pour amener une matière extrudable de lot thermoplastique à travers ceux-ci, et la portion de sortie (11b) possédant une pluralité de pointes pour noyau disposées de façon annulaire (13) venues de matière avec les extrémités d'intersection les plus internes desdites parois de séparation (12) pour former des fentes d'évacuation à travers lesquelles la matière de lot est extrudée pour former la matrice d'une structure alvéolaire cellulaire, caractérisée en ce que ledit corps de filière (11) est un corps unitaire en matière céramique frittée réalisant lesdites parois de séparation internes (12) et les pointes pour noyau (13).

2. Filière d'extrusion selon la revendication 1, dans laquelle ledit corps de filière (11) est réalisé en zircone frittée partiellement stabilisée.

3. Filière d'extrusion selon la revendication 1 ou la revendication 2, dans laquelle le rapport d'une zone d'ouverture (B) desdites fentes d'évacuation à une zone d'ouverture (A) desdits passages d'amenée (14a, 14b, 14c) est déterminé en accord avec la distribution de vitesse d'écoulement de la matière de lot dans la portion d'entrée (11a) dudit corps de filière.

4. Filière d'extrusion selon la revendication 1, la revendication 2 ou la revendication 3, dans laquelle ledit corps de filière (20a) est accouplé coaxialement à l'intérieur d'un élément formant collier (21) en matière céramique frittée de telle sorte que la portion de sortie dudit corps de filière (20a) forme un passage annulaire avec la paroi périphérique d'une cavité cylindrique (21b) formée dans ledit élément formant collier (21).

5. Filière d'extrusion selon la revendication 1, la revendication 2 ou la revendication 3, dans laquelle ledit corps de filière (30a) est superposé coaxialement sur un élément formant collier (21) en matière céramique frittée de telle manière que la portion de sortie dudit corps de filière (30a) forme un passage annulaire avec la paroi périphérique interne dudit élément formant collier (31).
